# EUROPÄISCHE PATENTANMELDUNG

(11) **EP 3 021 017 A1**
(43) Veröffentlichungstag der Anmeldung: **18.05.2016**
(21) Anmeldenummer: 15193415.5
(22) Anmeldetag: 06.11.2015
(51) Int. Cl.: F16K 1/48, F16K 17/04

(54) **SICHERHEITSVENTIL**

(30) Priorität: 12.11.2014 DE 202014105444 U
(71) Anmelder: ARI-ARMATUREN ALBERT RICHTER GmbH & Co.KG., 33758 Schloss Holte-Stukenbrock (DE)
(72) Erfinder: GASTBERG, Arne, 33803 Steinhagen (DE)
(74) Vertreter: Dantz, Jan Henning

(57) **Zusammenfassung**

Ein Sicherheitsventil, mit einer federbelasteten, axial bewegbaren Spindel (2), an der endseitig ein Ventilteller (4) angeordnet ist, zum dichten Verschließen eines Ventilsitzes (3) und einer am Ventilteller (4) befestigten und diesen umfänglich umschließenden, trichterförmigen Hubhilfe (5), die den Ventilsitz (3) radial überragt, ist so ausgebildet, dass der Ventilteller (4) und die Hubhilfe (5) auf ihren einander zugewandten Mantelflächen jeweils mit einer Ringnut (14, 14') versehen sind, in denen ein Sprengring (12) einliegt.

## Beschreibung

Die Erfindung betrifft ein Sicherheitsventil nach dem Oberbegriff des Anspruchs 1.

Derartige Sicherheitsventile kommen in unterschiedlichsten Einsatzbereichen zum Einsatz, wo sie dazu dienen Behälter, Rohrleitungssysteme oder -komponenten vor Überlastung zu sichern, wenn der Druck des darin geführten Mediums eine bestimmte Größe übersteigt.

Hierzu weist das Sicherheitsventil einen Ventilsitz auf, der mit einer das unter Druck stehende Medium führenden Rohrleitung in Wirkverbindung steht und der in Schließstellung des Sicherheitsventils, also bei Betriebsdruck des Mediums durch einen am Ventilsitz dichtend anliegenden Ventilteller verschlossen ist.

Dieser Ventilteller wiederum ist an einer Spindel befestigt, die gegen den Druck einer Feder axial verschiebbar ist, wobei die Schließkraft der Feder definiert ist durch den Betriebsdruck des in der Rohrleitung oder einem Behälter geführten Mediums. D.h., bei Überschreiten des Betriebsdrucks wird der Ventilteller gegen die dann nicht mehr ausreichende Kraft der Feder vom Ventilsitz abgehoben, so dass das Medium in eine Ausströmleitung geführt wird.

Mittels der Hubhilfe, die mit dem Ventilteller verbunden ist, wird die wirksame Druckfläche beim Austreten des Mediums aus dem Ventilsitz vergrößert, so dass das Ansprechverhalten des Ventiltellers beim Öffnen deutlich verbessert wird.

Für eine einwandfreie Funktionsfähigkeit des Ventiltellers werden hohe Anforderungen an dessen Sitzfläche gegenüber dem Ventilsitz gestellt, die bei verschleißbedingten Veränderungen eine Nachbearbeitung erfordern, beispielsweise durch Schleifen, Läppen oder dergleichen.

Hierzu ist jedoch die bauliche Trennung der Hubhilfe vom Ventilteller erforderlich, um so die plane Dichtfläche des Ventiltellers entsprechend bearbeiten zu können.

Die Hubhilfe ist deshalb lösbar mit dem Ventilteller verbunden, wozu beispielsweise in der DE 44 05 913 C2 vorgeschlagen wird, die Hubhilfe mit dem Ventilteller zu verstiften.

Dabei kommt ein Federring zum Einsatz, der außenseitig in eine Rille der Hubhilfe eingelegt ist, dessen beide Enden Durchgangsöffnungen der Hubhilfe durchtreten, bis in eine Ringnut des Ventiltellers.

Allerdings gestaltet sich die Handhabung zum Lösen dieser Verbindung als problematisch, da ein Ende des Federrings hakenförmig die Innenwandung der Hubhilfe hintergreift, wobei dieses hakenförmige Ende in die Ringnut des Ventiltellers eintaucht.

Überdies ist der Federring als nicht normiertes Bauteil separat zu fertigen, was naturgemäß nur mit einem entsprechend hohen Aufwand zu realisieren ist. Letzteres betrifft im Übrigen auch die Durchsteckbohrungen der Hubhilfe für die Enden des Federrings, deren Einbringen ebenfalls entsprechende Fertigungsmaßnahmen erfordert.

Der Erfindung liegt die Aufgabe zugrunde, ein Sicherheitsventil der gattungsgemäßen Art so weiterzuentwickeln, dass es einfacher und kostengünstiger herstell-, montier- und demontierbar ist.

Diese Aufgabe wird durch ein Sicherheitsventil mit den Merkmalen des Anspruchs 1 gelöst.

Das neue Sicherheitsventil, insbesondere der Ventilteller mit daran befestigter Hubhilfe bietet gegenüber dem Stand der Technik erhebliche Vorteile.

Dazu zählt zunächst einmal die einfache Herstellung der Hubhilfe, die als Drehteil oder als Blechformteil zu fertigen ist.

Der erfindungsgemäß als Verbindungselement zur Verbindung des Ventiltellers mit der Hubhilfe eingesetzte Sprengring ist als Normteil in gewünschten Abmessungen kostengünstig im Handel erhältlich.

Dabei gestaltet sich der Zusammenbau beider Funktionsteile, ebenso wie deren Demontage, im Gegensatz zum Stand der Technik, äußerst einfach, da lediglich der Sprengring mit einem ebenfalls handelsüblichen Werkzeug, beispielsweise einer geeigneten Zange, aus seiner Verbindungsposition gelöst werden kann.

Hierzu weist bevorzugt der Ventilteller eine Ausnehmung auf, die auf der der Sitzfläche gegenüberliegenden Seite offen ist, so dass sozusagen von oben her das Werkzeug zum Lösen der Verbindung eingeführt und der Sprengring durch Zusammendrücken aus seinem Eingriff mit der Hubhilfe gebracht werden kann.

Der Ventilteller ist zweckmäßigerweise mit der Spindel verschraubt oder verstiftet, wobei hierzu der Ventilteller eine angeformte Nabe aufweist, in die die Spindel, mit einer Querbohrung zur Durchführung des Stiftes oder der Schrauben versehen, eingesteckt ist.

Um den Sprengring, der sich aufgrund seiner Rückstellkräfte radial nach außen spreizt, außer Eingriff mit der Hubhilfe zu bringen, ist die ventiltellerseitige Ringnut in ihrer Tiefe so bemessen, dass sie bei Zusammendrücken des Sprengrings diesen in seiner vollständigen Dicke aufnehmen kann, so dass die Hubhilfe, deren lichter Durchmesser im Anlagebereich mit dem Ventilteller dessen Außendurchmesser entspricht, abzogen werden kann.

Danach liegt die Sitzfläche vollständig frei und kann auf geeignete Art und Weise nachbearbeitet werden.

Eine Montage, also der Zusammenbau der Hubhilfe und des Ventiltellers kann ohne Werkzeug erfolgen, wobei bevorzugt die Hubhilfe an ihrem Einführende mit einer umlaufenden Einführschräge im Sinne einer Fase versehen sein kann.

Während bei der Konstruktion nach dem Stand der Technik, wie sie eingangs beschrieben ist, der Federring nach einer Demontage der Hubhilfe vom Ventilteller nicht mehr verwandt werden kann, insbesondere weil er zur Entnahme stark verbogen werden muss, kann der Sprengring gemäß der Erfindung, aber können auch die übrigen Bauteile, also der Ventilteller und die Hubhilfe, erneut eingesetzt werden, was naturgemäß gleichfalls zu einer Kostenminimierung beiträgt.

Das Breitenabmaß der Ringnuten entspricht dem Durchmesser des Sprengringes bzw. dessen zugeordnetem Breitenabmaß, wenn dieser einen rechteckigen Querschnitt aufweist. Damit wird eine im Wesentlichen spielfreie axiale Sicherung der Hubhilfe am Ventilteller erreicht.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: ein erfindungsgemäßes Sicherheitsventil in einem Längsschnitt,
- Figur 2: eine Einzelheit des Sicherheitsventils in einer perspektivischen Ansicht,
- Figur 3: die Einzelheit nach Figur 2 in einer Draufsicht,
- Figur 4: einen Schnitt durch die Einzelheit gemäß der Linie IV-IV in Figur 3,
- Figur 5: einen Schnitt durch die Einzelheit, gemäß der Linie V-V in Figur 3.

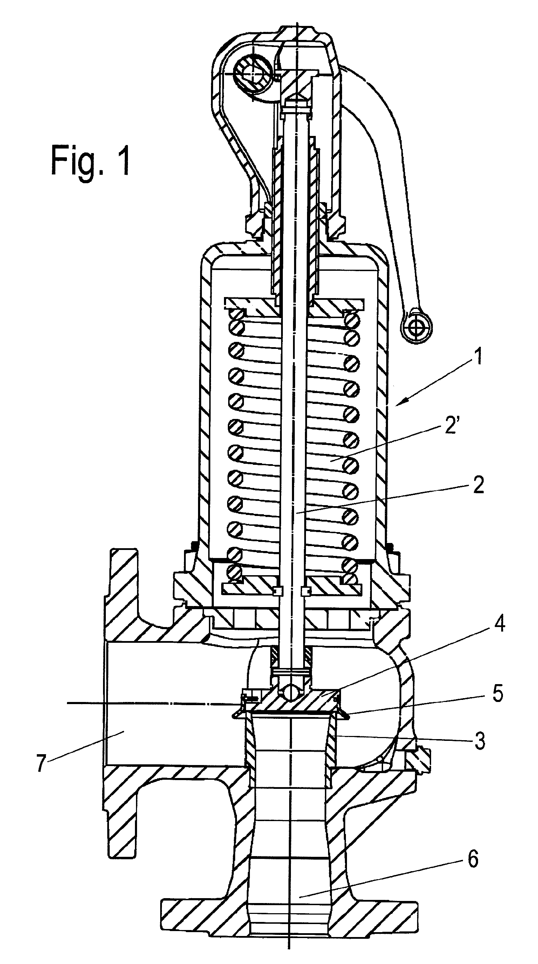

In der Figur 1 ist ein Sicherheitsventil dargestellt, mit einem Gehäuse 1, in dem eine axial verschiebbare Spindel 2 gelagert ist, die an einem Ende einen Ventilteller 4 trägt, der mittels einer die Spindel 2 umgebenden Druckfeder 2', in Form einer Schraubenfeder, an einen Ventilsitz 3 dichtend anpressbar ist.

Dieser Ventilsitz 3 wird durch den Endbereich einer Einströmleitung 6 gebildet, die mit einem unter Druck stehenden Medium in Verbindung steht. Bei einem Überdruck wird der Ventilteller 4 gegen die Kraft der Druckfeder 2' angehoben, so dass das Medium über eine Ausströmleitung 7 entweichen kann, bis sich der vorbestimmte Betriebsdruck wieder einstellt.

Zur Erhöhung des auf den Ventilteller 4 wirkenden Mediendrucks ist am Ventilteller 4 eine trichterförmige Hubhilfe 5 vorgesehen, die den Ventilteller 4 zumindest in einem Teilbereich umfänglich umschließt, wobei die Hubhilfe 5 zur Ausbildung der Trichterform einen umlaufenden, abgewinkelten Kragen 15 aufweist, der den Ventilsitz 3 radial überragt.

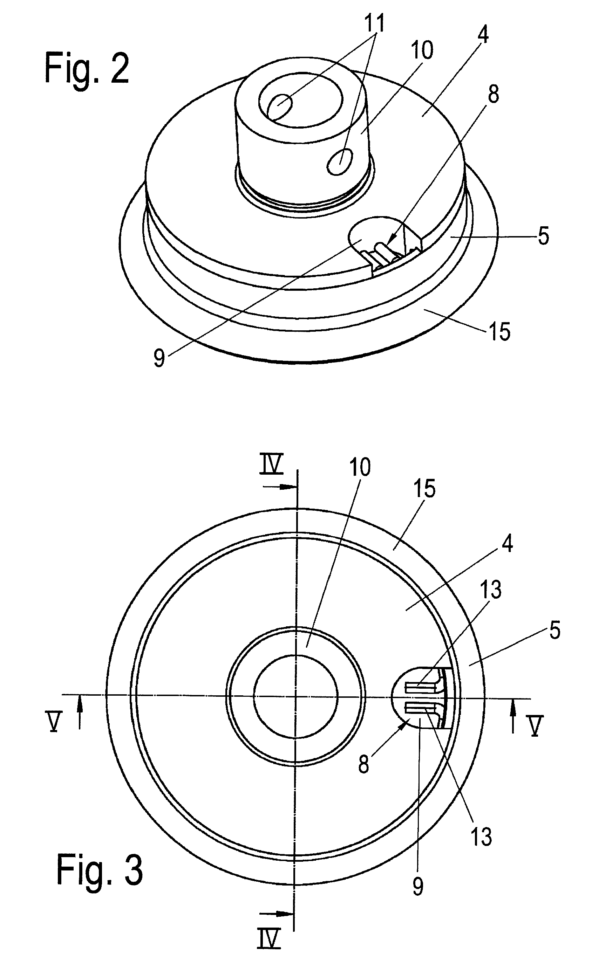

In den Figuren 2-5 sind der Ventilteller 4 und die Hubhilfe 5 als Baueinheit dargestellt.

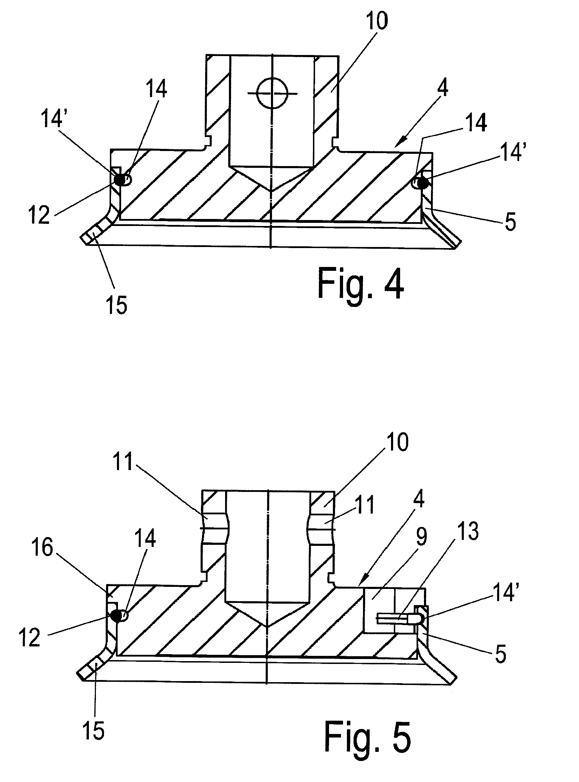

Insbesondere in den Figuren 4 und 5, die jeweils einen Schnitt durch die Baueinheit wiedergeben, entsprechend der Angabe in der Figur 3, ist deutlich zu erkennen, dass die einander zugewandten Mantelflächen des Ventiltellers 4 und der Hubhilfe 5 jeweils eine Ringnut 14, 14' aufweisen, die in einer Ebene liegen und in denen ein Sprengring 12 einliegt.

Dabei entspricht die Tiefe der Ringnut 14 des Ventiltellers 4 zumindest dem Durchmesser des im Querschnitt runden Sprengrings 12, während die Tiefe der Ringnut 14' der Hubhilfe etwa dem Radius des Sprengrings 12 entspricht, so dass dieser in Sperrstellung, also wenn er in der Ringnut 14' einliegt, entsprechend weit in die Ringnut 14 des Ventiltellers 4 ragt und einen Formschluss der Bauteile zueinander herstellt.

Durch die größere Tiefe der Ringnut 14 des Ventiltellers 4 kann dieser zur Demontage der Hubhilfe 15 in die Ringnut 14 gedrückt werden, so dass der Sprengring 12 außer Eingriff mit der Ringnut 14' der Hubhilfe 15 gelangt und der Formschluss gelöst wird.

Hierzu kommt ein nicht dargestelltes geeignetes Werkzeug zum Einsatz, insbesondere eine an sich bekannte Zange, die in eine Ausnehmung 9 des Ventiltellers 4 einführbar ist, die auf der dem Kragen 15 der Hubhilfe 5 gegenüberliegenden Seite offen ist und in die abgewinkelte Schenkel 13 des Sprengrings 12 ragen, bei deren Zusammendrücken der radial nach außen federnd ausgebildete Sprengring 12 aus seiner in der Ringnut 14' der Hubhilfe 5 liegenden Sperrstellung gedrückt wird.

Im Übrigen ist an den Ventilteller 4 auf der der Hubhilfe 5 abgewandten Seite eine Nabe 10 angeformt, in die die Spindel 2 eingesteckt ist und darin durch beispielsweise einen Stift gehalten wird, der durch Querbohrungen 11 der Nabe 10 geführt ist. Neben dem Sprengring 12 dient zur axialen Sicherung der Hubhilfe 6 am Ventilteller 4 ein daran angeformtes, radial nach außen vorstehendes Bündchen 16, an dem die Hubhilfe 5 mit der dem Kragen 15 abgewandten Stirnseite anliegt.

## Patentansprüche

1. Sicherheitsventil, mit einer federbelasteten, axial bewegbaren Spindel (2), an der endseitig ein Ventilteller (4) angeordnet ist, zum dichten Verschließen eines Ventilsitzes (3) und einer am Ventilteller (4) befestigten und diesen umfänglich umschließenden, trichterförmigen Hubhilfe (5), die den Ventilsitz (3) radial überragt, **dadurch gekennzeichnet, dass** der Ventilteller (4) und die Hubhilfe (5) auf ihren einander zugewandten Mantelflächen jeweils mit einer Ringnut (14, 14') versehen sind, in denen ein Sprengring (12) einliegt.

2. Sicherheitsventil nach Anspruch 1, **dadurch gekennzeichnet, dass** die Tiefe der Ringnut (14) des Ventiltellers (4) zumindest dem zugeordneten Querschnittsabmaß des Sprengrings (12) entspricht, während die Tiefe der Ringnut (14') der Hubhilfe (5) kleiner ist als das Querschnittsabmaß des Sprengrings (12).

3. Sicherheitsventil nach Anspruch 1 oder 2, **dadurch gekennzeichnet, dass** die Breite der Ringnuten (14, 14') der zugeordneten Breite des Sprengrings (12) entspricht.

4. Sicherheitsventil nach einem der vorhergehenden Ansprüche, **dadurch gekennzeichnet, dass** die Hubhilfe (5) in ihrem dem Sprengring (12) zugewandten Endbereich auf ihrer Innenseite eine Einführschräge aufweist.

5. Sicherheitsventil nach einem der vorhergehenden Ansprüche, **dadurch gekennzeichnet, dass** die Hubhilfe (5) mit ihrer dem radialen Überstand abgewandten Stirnseite an einem radial vorstehenden Bündchen (16) des Ventiltellers (4) anliegt.

6. Sicherheitsventil nach einem der vorhergehenden Ansprüche, **dadurch gekennzeichnet, dass** der Ventilteller (4) eine Ausnehmung (9) aufweist, in die abgewinkelte Schenkel (13) des Sprengrings (12) ragen.

7. Sicherheitsventil nach einem der vorhergehenden Ansprüche, **dadurch gekennzeichnet, dass** die Ausnehmung (9) auf ihrer dem radialen Überstand der Hubhilfe (5) abgewandten Seite zur Einführung eines Werkzeugs offen ist.

8. Sicherheitsventil nach einem der vorhergehenden Ansprüche, **dadurch gekennzeichnet, dass** der Ventilteller (4) eine Nabe (10) aufweist, in die die Spindel (2) eingesteckt und darin befestigt ist.
